# EUROPEAN PATENT APPLICATION

(11) **EP 4 683 016 A1**
(43) Date of publication of application: **21.01.2026**
(21) Application number: 24189717.2
(22) Date of filing: 19.07.2024
(51) Int. Cl.: H01M 8/18

(54) **METHOD FOR PREPARATION OF IRON SALT BATTERY ELECTROLYTE**

(71) Applicant: VoltStorage GmbH, 80935 München (DE)
(72) Inventor: Alper, John, 80797 München (DE); Zec, Neboj a, 81245 München (DE)
(74) Representative: Grünecker Patent- und Rechtsanwälte PartG mbB

(57) **Abstract**

The invention provides a method for preparation of an iron salt battery electrolyte. The method comprises the following steps: supplying iron(III) chloride, FeCl₃, into an agitated reactor containing a dilute solution of hydrochloric acid, HCl, having a pH value less than 1; supplying elemental iron, Fe, into the reactor, wherein the elemental iron reacts with iron(III) to iron(II); monitoring the pH value of reactor solution; using the monitored pH value to control supplying additional hydrochloric acid, HCl, into the reactor in order to maintain a pH of the reactor solution less than 1; and converting excess Fe³⁺ to Fe²⁺ in an electrochemical cell having a membrane or a separator between an anode and a cathode thereof by directing the reactor solution from the reactor through the anode of the electrochemical cell. A flow rate of the reactor solution through the anode is controlled to obtain a final Fe³⁺ concentration in the anode outlet FeCl₂ stream of 15% or less than 15% of a total dissolved iron concentration as the iron salt battery electrolyte.

## Description

### Field of the Invention

The invention relates to a method for preparation of an iron salt battery electrolyte.

### Prior Art

Different redox flow batteries are known in the art. A particular type is the iron salt battery which has the advantage of being cost efficient due to using only iron in different oxidation states as the electrolyte. It comprises two tanks, which in the uncharged state store electrolytes of dissolved Fe(ll) ions. The electrolyte is pumped into the battery cell which includes two separated half-cells. The base electrolyte comprises Fe(ll) salts which are dissolved in water, where Cl⁻ ions may be used as counter ions. Fe(ll) chloride is preferred since the conductivity thereof is high.

Electrolyte for the positive tank is pumped through the positive half-cell, and electrolyte for the negative tank is pumped through the negative half-cell. The electrochemical reaction takes place at the electrodes within each half-cell. The half-cells are separated by a separator. This can be an anionic exchange membrane, a cationic exchange membrane or a porous separator.

The energy storage is based on the electrochemical reaction of iron. During charge, Fe(ll) oxidizes to Fe(lll) in the positive half-cell while in the negative half-cell Fe(ll) is reduced to Fe(0). The latter reaction in the negative half-cell is also called the plating reaction, as Fe(0) is deposited on the negative electrode. During discharge, the plated Fe(0) is dissolved into the electrolyte forming Fe(II), while Fe(lll) reduces to Fe(ll) in the positive half-cell.

Specifically, an iron salt battery utilizes the following chemistry in order to store electrical energy:
Positive half-cell:

| | |
|---|---|
| Fe²⁺ → Fe³⁺ + e⁻ | E⁰ = +0.77 V (vs. SHE) |

Negative half-cell:

| | |
|---|---|
| Fe²⁺ + 2 e⁻ → Fe⁰₍ₛ₎ | E⁰ = -0.44 V (vs. SHE) |

Here SHE refers to a standard hydrogen electrode. The SHE is an electrode that utilizes the redox reaction between hydrogen gas and hydrogen ions in solution. It is given a potential of exactly 0 volts, and all other electrode potentials are measured relative to this value.

The reverse reaction releases electrical energy.

Typical methods of forming solutions of FeCl₂ may involve oxidation of metallic iron in a concentrated HCl solution, the purchase and dissolution of high purity FeCl₂ salts, or it can be obtained as a byproduct of the chlorine process for separating Fe and Ti oxides from natural ores. High purity FeCl₂ may also be subject to oxidation of Fe(ll) to Fe(lll) during transportation.

However, these methods pose potential safety hazards (concentrated HCl), cost issues (high cost for pure FeCl₂ salts) or purity issues (byproduct uses).

### Description of the Invention

It is the object of the present invention to overcome or alleviate at least some of the above mentioned disadvantages. The present application describes a method for preparing an iron salt battery electrolyte using an alternate pathway to conventionally produced solutions of FeCl₂.

For an iron salt battery, the starting (fully discharged) electrolyte is comprised of a solution of FeCl₂ (between 1.5-2.5 molar) and supporting chloride salt or other supporting salt that may enhance conductivity, such as NH₄Cl, KCI, or NaCl (providing between 1 - 2.5 molar additional chloride). There is an acceptable amount of FeCl₃ in the solution between 0-5% of the total iron content (concentration), depending on the use case. The pH of the electrolyte is in the range between 0 - 1, again depending on the use case.

This object is achieved by the method according to independent claim 1.

Claim 1 provides a method for preparation of an iron salt battery electrolyte. The method comprises the following steps: supplying iron(III) chloride, FeCl₃, into an agitated reactor containing a dilute solution of hydrochloric acid, HCl, having a pH value less than 1; supplying elemental iron, Fe, into the reactor, wherein the elemental iron reacts with iron(III) to iron(II); monitoring the pH value of reactor solution; using the monitored pH value to control supplying additional hydrochloric acid, HCl, into the reactor in order to maintain a pH of the reactor solution less than 1; and converting excess Fe³⁺ to Fe²⁺ in an electrochemical cell having a membrane or a separator between an anode and a cathode thereof by directing the reactor solution from the reactor through the anode of the electrochemical cell.

A flow rate of the reactor solution through the anode is controlled to obtain a final Fe³⁺ concentration in the anode outlet FeCl₂ stream of 15% or less than 15% of a total dissolved iron concentration as the iron salt battery electrolyte.

The agitated reactor may in particular be a stirred reactor. The agitation may be performed by using an agitator, in particular at least one of a stirrer, a pump, a bubbler, or a propeller. The flow rate of the reactor solution through the anode may be adjusted by a pump or a valve, for example.

The method according to the invention has the advantage that it uses lower cost and less hazardous starting materials to obtain acceptable purity electrolyte with reduced cost, by using relatively low hazard class materials and the potential for mainly solid salt additions, shipping of solutions and installed cost of large scale batteries is reduced, and it enhances the safety and environmental friendliness of the iron salt batteries by avoiding any organic solvents.

The requirement that the final Fe³⁺ concentration is 15% or less than 15% of a total dissolved iron concentration means that the ratio of the concentration of Fe³⁺ to the sum of the concentrations of Fe²⁺ and Fe³⁺ is equal or less than 0.15, i.e. [Fe³⁺]/([Fe²⁺]+[Fe³⁺]) ≤ 0.15.

In a development of the method according to the invention, the dilute solution of HCl may be an aqueous solution of HCl or a mixture of an aqueous solution of HCl and at least one of ammonium chloride, NH₄Cl, potassium chloride, KCI, sodium chloride, NaCl, or other chloride containing salt.

In another development, the supplying step is performed as a continuous process or as a batch process.

According to a further development, the iron(III) chloride may be supplied as an aqueous solution of iron(III) chloride or as a powder of iron(III) chloride.

In another development, the aqueous solution of iron(III) chloride may have a concentration between 1 and 2.2 mol/L, in particular 1.6 to 1.9 mol/L.

According to a further development, the method may comprise the step of monitoring at least one of a Fe³⁺/Fe²⁺ ratio, a total concentration of Fe³⁺ and a total concentration Fe²⁺ within the reactor. The flow rate through the anode of the electrochemical cell may be controlled by using the monitored Fe³⁺/Fe²⁺ ratio, in particular by using the monitored total concentration of Fe³⁺ and the total concentration of Fe²⁺ within the reactor.

In another development, the pH may be maintained between 0.2 and 0.8.

According to a further development, the final Fe³⁺ concentration in the anode outlet FeCl₂ stream may be 0-10% and preferably 5-10% of the total dissolved iron concentration.

In another development, the method may comprise a finishing step of adding at least one of ammonium chloride, NH₄Cl, potassium chloride, KCI, and sodium chloride, NaCl, or other chloride containing salt and adjusting a total dissolved iron concentration to less than 3M.

This can be further developed in that the content of FeCl₂ is 1.5 - 2.5 molar and/or the content of NH₄Cl and/or KCI and/or NaCl and/or another chloride containing salt, may be contributing an additional chloride content of 1 - 2.5 molar and/or the amount of FeCl₃ in the solution may be 0-10% of the total dissolved iron concentration and preferably between 5-10%.

According to a further development, the method may comprise the further step of adjusting the total dissolved iron concentration and/or Cl⁻ concentration in a downstream processes.

In another development, the solution from the reactor may also be directed through a cathode of the electrochemical cell and back to the reactor, whereby Fe³⁺ reacts to Fe²⁺ at the anode and Fe²⁺ reacts to Fe³⁺ at the cathode, wherein an external power source provides energy to drive the reaction, and the method further comprises monitoring the Fe³⁺ concentration in the reactor and controlling the flow rate from the reactor to result in a desired Fe³⁺ concentration in the reactor.

According to a further development, the electrochemical cell may be a hydrogen recombination cell, wherein hydrogen, H₂, is fed to the cathode of the hydrogen recombination cell, thereby reacting via H₂ + 2 Fe³⁺ -> 2Fe²⁺ + 2H⁺, wherein an external power load is used to dissipate the energy generated by the reaction, and the method further comprises monitoring the Fe³⁺ concentration in the reactor and controlling the flow rate from the reactor to result in a desired Fe³⁺ concentration in the reactor.

In another development, the electrochemical cell may be an electrolysis cell, wherein hydrochloric acid, HCl, is fed to the cathode of the electrolysis cell, thereby reacting via 2OH⁻ + 2Fe³⁺ -> 2Fe²⁺ + ½ O₂ + H₂O, wherein an external power source provides energy to drive the reaction, and the method further comprises monitoring the Fe³⁺ concentration in the reactor and controlling the flow rate from the reactor to result in a desired Fe³⁺ concentration in the reactor.

This can be further developed in that the hydrochloric acid fed to the cathode has a pH in the range of 0 - 1, and wherein produced oxygen, Oz, is released from the cathode.

The invention further provides an apparatus according to claim 16.

The apparatus according to the invention comprises: a reactor configured to be agitated, the reactor configured for containing a dilute solution of hydrochloric acid, HCl, having a pH value less than 1; a pH monitoring device configured to monitor the pH value of reactor solution; an electrochemical cell having a membrane or a separator between an anode and a cathode thereof; a flow adjustment device, in particular a pump or a valve, configured to adjust a flow rate of the reactor solution from the reactor through the anode of the electrochemical cell; and a controller configured to use the monitored pH value to control supplying additional hydrochloric acid, HCl, into the reactor in order to maintain a pH of the reactor solution less than 1, and configured to control the flow rate of the reactor solution through the anode to obtain a final Fe³⁺ concentration in the anode outlet FeCl₂ stream of 15% or less than 15% of a total dissolved iron concentration as the iron salt battery electrolyte.

This apparatus may perform the method according to the invention or any of the above-described developments of the method according to the invention.

Further features and exemplary embodiments as well as advantages of the present invention will be explained in greater detail hereinafter with reference to the drawings. It is understood that the specific embodiments do not limit the present invention.

### Brief Description of the Drawings

- Fig. 1: illustrates a first embodiment of the method for preparation of an iron salt battery electrolyte.
- Fig. 2: illustrates a second embodiment of the method for preparation of an iron salt battery electrolyte.
- Fig. 3: illustrates a third embodiment of the method for preparation of an iron salt battery electrolyte.
- Fig. 4: illustrates a fourth embodiment of the method for preparation of an iron salt battery electrolyte.
- Fig. 5: illustrates a fifth embodiment of the method for preparation of an iron salt battery electrolyte.
- Fig. 6: illustrates a sixth embodiment of the method for preparation of an iron salt battery electrolyte.
- Fig. 7: shows an apparatus for preparation of an iron salt battery electrolyte.

### Embodiments

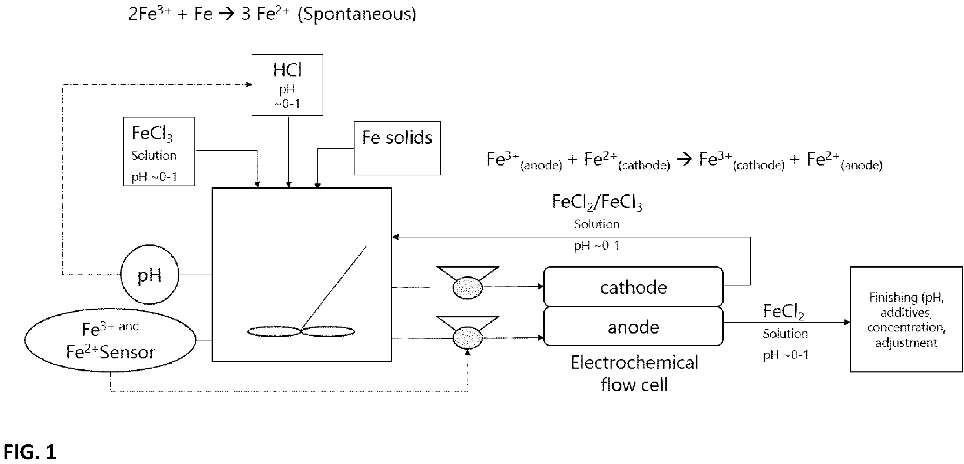

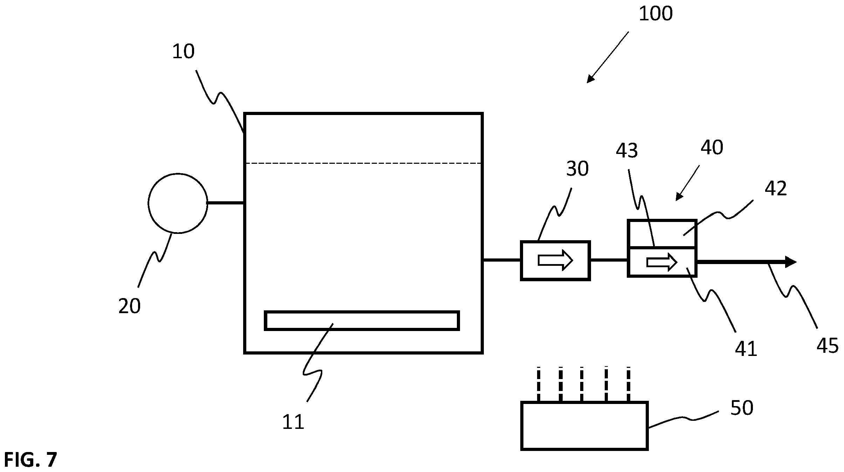

The invention is described in detail for the following embodiments with respect to the accompanying drawings. Figures 1-6 show various embodiments of the method and Fig. 7 shows a general structure of the apparatus, which will be elaborated in greater detail below.

Fig. 1 illustrates a first embodiment of the method for preparation of an iron salt battery electrolyte.

The method comprises the following steps: supplying iron(III) chloride, FeCl₃, into an agitated reactor containing a dilute solution of hydrochloric acid, HCl, having a pH value less than 1; supplying elemental iron, Fe, into the reactor, wherein the elemental iron reacts with iron(III) to iron(II); monitoring the pH value of reactor solution; using the monitored pH value to control supplying additional hydrochloric acid, HCl, into the reactor in order to maintain a pH of the reactor solution less than 1; converting excess Fe³⁺ to Fe²⁺ in an electrochemical cell having a membrane or a separator between an anode and a cathode thereof by directing the reactor solution from the reactor through the anode of the electrochemical cell. A flow rate of the reactor solution through the anode is controlled to obtain a final Fe³⁺ concentration in the anode outlet FeCl₂ stream of 15% or less than 15% of a total dissolved iron concentration as the iron salt battery electrolyte.

The dilute solution of HCl may be an aqueous solution of HCl or a mixture of an aqueous solution of HCl and at least one of ammonium chloride, NH₄Cl, potassium chloride, KCI, sodium chloride, NaCl, or another chloride containing salt.

The iron(III) chloride is supplied as an aqueous solution of iron(III) chloride.

The supplying step is performed as a continuous process or as a batch process.

The solution from the reactor is also directed through a cathode of the electrochemical cell and back to the reactor, whereby Fe³⁺ reacts to Fe²⁺ at the anode and Fe²⁺ reacts to Fe³⁺ at the cathode, wherein an external power source provides energy to drive the reaction, and the method further comprises monitoring the Fe³⁺ concentration in the reactor and controlling the flow rate from the reactor to result in a desired Fe³⁺ concentration in the reactor. The external power source may be a battery.

The method may comprise a finishing step of adding at least one of ammonium chloride, NH₄Cl, potassium chloride, KCI, sodium chloride, NaCl, or another chloride containing salt and adjusting a total dissolved iron concentration to less than 3M.

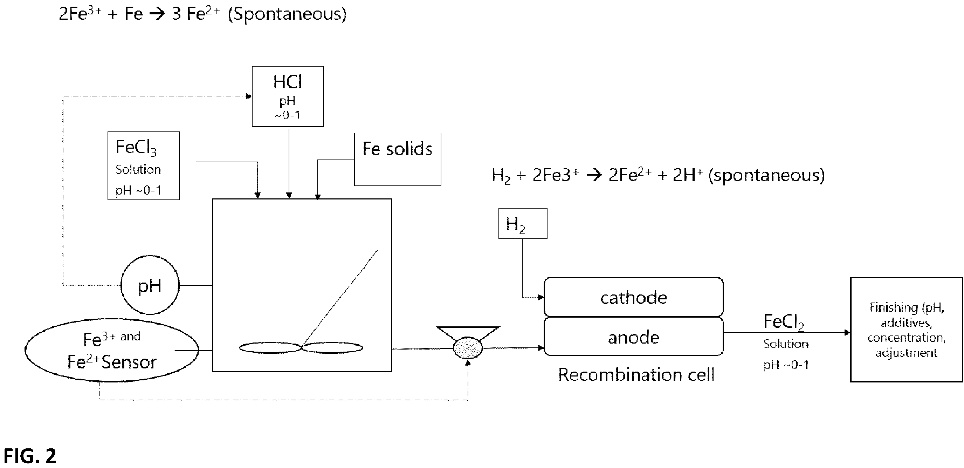

Fig. 2 illustrates a second embodiment of the method for preparation of an iron salt battery electrolyte.

The process is similar to the process described with reference to Fig. 1, with exception that the electrochemical cell is a hydrogen recombination cell, wherein hydrogen, H₂, is fed to the cathode of the hydrogen recombination cell, thereby reacting via H₂ + 2 Fe³⁺ - > 2Fe²⁺ + 2H⁺, wherein an external power load is used to dissipate the energy generated by the reaction, and the method further comprises monitoring the Fe³⁺ concentration in the reactor and controlling the flow rate from the reactor to result in a desired Fe³⁺ concentration in the reactor. The external power load may be an electric resistor.

The iron(III) chloride is supplied as an aqueous solution of iron(III) chloride.

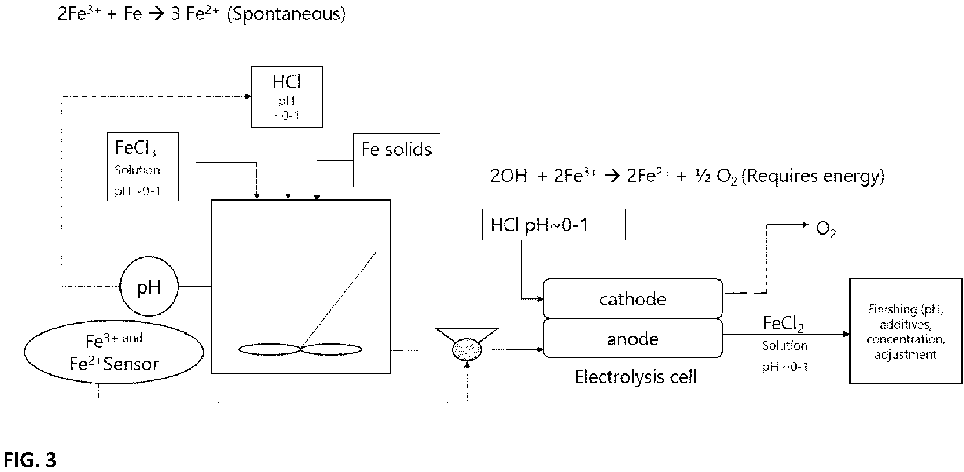

Fig. 3 illustrates a third embodiment of the method for preparation of an iron salt battery electrolyte.

The process is similar to the process described with reference to Fig. 1, with exception that the electrochemical cell is an electrolysis cell, wherein hydrochloric acid, HCl, is fed to the cathode of the electrolysis cell, thereby reacting via 2OH⁻ + 2Fe³⁺ -> 2Fe²⁺ + ½ Oz + H₂O, wherein an external power source provides energy to drive the reaction, and the method further comprises monitoring the Fe³⁺ concentration in the reactor and controlling the flow rate from the reactor to result in a desired Fe³⁺ concentration in the reactor. The hydrochloric acid fed to the cathode has a pH in the range of 0 - 1, and the produced oxygen, Oz, is released from the cathode. The external power source may be a battery.

The iron(III) chloride is supplied as an aqueous solution of iron(III) chloride.

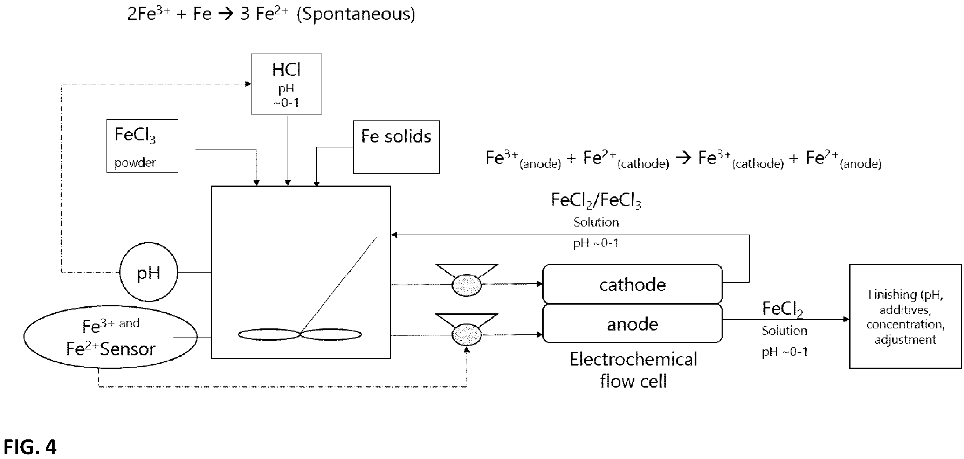

Fig. 4 illustrates a fourth embodiment of the method for preparation of an iron salt battery electrolyte.

The process is similar to the process described with reference to Fig. 1, with exception that the iron(III) chloride is supplied as a powder of iron(III) chloride.

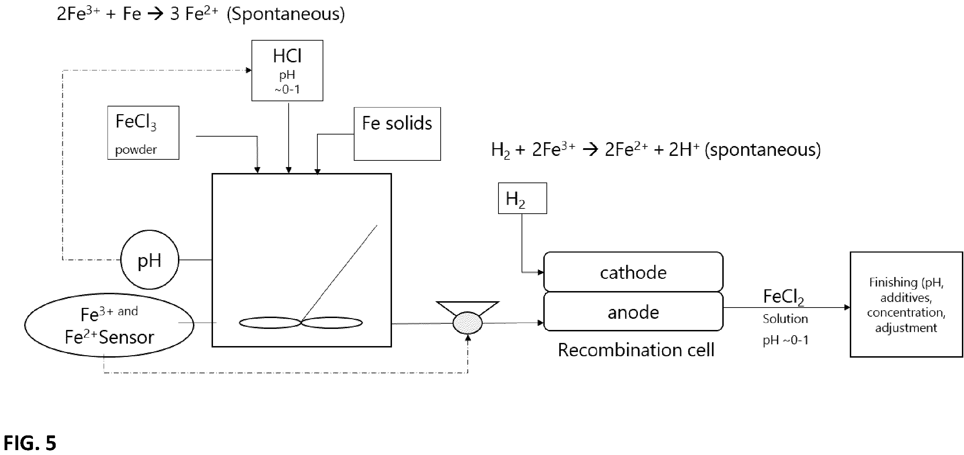

Fig. 5 illustrates a fifth embodiment of the method for preparation of an iron salt battery electrolyte.

The process is similar to the process described with reference to Fig. 2, with exception that the iron(III) chloride is supplied as a powder of iron(III) chloride.

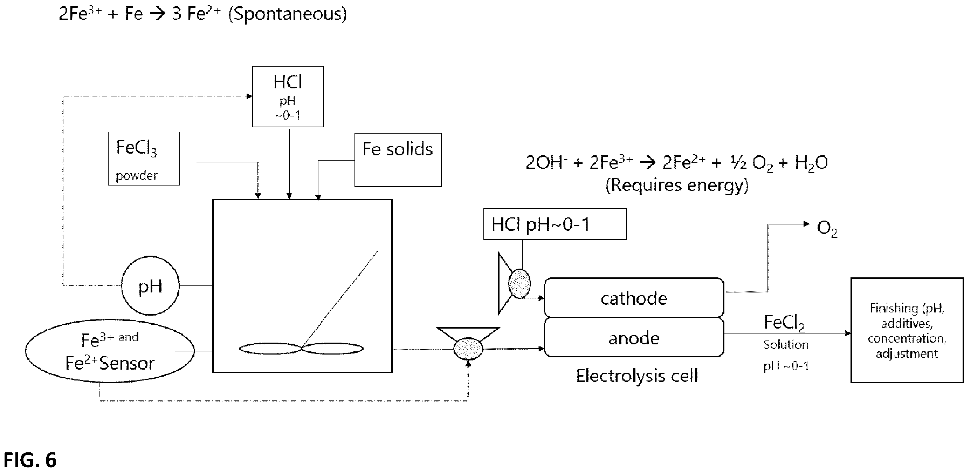

Fig. 6 illustrates a sixth embodiment of the method for preparation of an iron salt battery electrolyte.

The process is similar to the process described with reference to Fig. 3, with exception that the iron(III) chloride is supplied as a powder of iron(III) chloride.

Fig. 7 shows an apparatus 100 for preparation of an iron salt battery electrolyte.

The apparatus 100 comprises a reactor 10 configured to be agitated. Agitation may be provided by an agitator 11, in particular at least one of a stirrer, a pump, a bubbler, and a propeller.

During use, the reactor contains a dilute solution of hydrochloric acid, HCl, having a pH value less than 1. The apparatus 100 comprises a pH monitoring device 20 configured to monitor the pH value of the reactor solution. The apparatus 100 further comprises an electrochemical cell 40 having a membrane 43 or a separator between an anode 41 and a cathode 42 of the electrochemical cell 40 and a flow adjustment device 30, in particular a pump or a valve, configured to adjust a flow rate of the reactor solution from the reactor 10 through the anode 41 of the electrochemical cell 40. In addition, the apparatus 100 comprises a controller 50 configured to use the monitored pH value to control supplying additional hydrochloric acid, HCl, into the reactor 10 in order to maintain a pH of the reactor solution less than 1. The controller 50 is further configured to control the flow rate of the reactor solution through the anode 41 to obtain a final Fe³⁺ concentration in the anode outlet FeCl₂ stream 45 of 15% or less than 15% of a total dissolved iron concentration as the iron salt battery electrolyte.

Summarized the method and apparatus according to the invention provide the following technical effects and advantages.

The method proposed involves feeding a solution or powder of iron(III) chloride and elemental iron into a stirred reactor. Within the reactor the following chemistry occurs:
1. 2Fe³⁺ + Fe → 3Fe²⁺ (spontaneous)
2. Fe + 2 H₃0⁺ → Fe²⁺ + H₂ + 2 H₂O (spontaneous)

Within the reactor the pH, Fe³⁺/Fe²⁺ ratio, and total concentration of Fe³⁺ and Fe²⁺ is monitored. The pH measurement is used to control the addition of diluted hydrochloric acid in order to maintain a pH where the Fe³⁺ species are soluble.

The reaction vessel is controlled in regards to the Fe3+ concentration to ensure that all elemental iron is dissolved, simplifying processing. Excess Fe3+ is then converted to Fe2+ through either the use of an electrochemical cell, a hydrogen recombination cell, or an electrolysis cell, as pictured in the figures.

The rate of pumping into this electrochemical cell is controlled by monitoring of the Fe³7Fe²⁺ ratio.

The final FeCl₂ solution, of pH ~0-1, with a total dissolved Fe content of greater than 2.5 M is then adjusted for total dissolved Fe content and Cl⁻ content in the downstream processes.

The patent application provides the following advantages of the method:
- It uses lower cost and less hazardous starting materials to obtain acceptable purity electrolyte with reduced cost.
- By using relatively low hazard class materials and the potential for mainly solid salt additions, shipping of dilute solutions and installed cost of large scale batteries is reduced.
- It enhances the safety and environmental friendliness of the iron salt batteries by avoiding any organic solvents.

The embodiments are only exemplary and the full scope of the present invention is defined by the claims.

## Claims

1. Method for preparation of an iron salt battery electrolyte, comprising:
supplying iron(III) chloride, FeCl₃, into an agitated reactor, in particular stirred reactor, containing a dilute solution of hydrochloric acid, HCl, having a pH value less than 1;
supplying elemental iron, Fe, into the reactor, wherein the elemental iron reacts with iron(III) to iron(II);
monitoring the pH value of reactor solution;
using the monitored pH value to control supplying additional hydrochloric acid, HCl, into the reactor in order to maintain a pH of the reactor solution less than 1;
converting excess Fe³⁺ to Fe²⁺ in an electrochemical cell having a membrane or a separator between an anode and a cathode thereof by directing the reactor solution from the reactor through the anode of the electrochemical cell;
wherein a flow rate of the reactor solution through the anode is controlled to obtain a final Fe³⁺ concentration in the anode outlet FeCl₂ stream of 15% or less than 15% of a total dissolved iron concentration as the iron salt battery electrolyte.

2. Method according to claim 1, wherein the dilute solution of HCl is an aqueous solution of HCl or a mixture of an aqueous solution of HCl and at least one of ammonium chloride, NH₄Cl, potassium chloride, KCI, sodium chloride, NaCl, or another chloride containing salt.

3. Method according to claim 1 or 2, wherein the supplying step is performed as a continuous process or as a batch process.

4. Method according to any one of claims 1 to 3, wherein the iron(III) chloride is supplied as an aqueous solution of iron(III) chloride or as a powder of iron(III) chloride.

5. Method according to claim 4, wherein the supplied aqueous solution of iron(III) chloride has a concentration between 1 and 2.2 mol/L, in particular 1.6 to 1.9 mol/L.

6. Method according to any one of claims 1 to 5, further comprising:
monitoring at least one of a Fe³⁺/Fe²⁺ ratio, a total concentration of Fe³⁺ and a total concentration Fe²⁺ within the reactor, wherein the flow rate through the anode of the electrochemical cell is controlled by using the monitored Fe³⁺/Fe²⁺ ratio, in particular by using the monitored total concentration of Fe³⁺ and the total concentration of Fe²⁺ within the reactor.

7. Method according to any one of claims 1 to 6, wherein the pH is maintained between 0.2 and 0.8.

8. Method according to any one of claims 1 to 7, wherein the final Fe³⁺ concentration in the anode outlet FeCl₂ stream is 0-10% and preferably 5-10% of the total dissolved iron concentration.

9. Method according to any one of claims 1 to 8, further comprising a finishing step of adding at least one of ammonium chloride, NH₄Cl, potassium chloride, KCI, sodium chloride, NaCl, or another chloride containing salt, and adjusting a total dissolved iron concentration to less than 3M.

10. Method according to claim 9, wherein the content of FeCl₂ is 1.5 - 2.5 molar and/or the content of NH₄Cl and/or KCI and/or NaCl is 1 - 2.5 molar and/or the amount of FeCl₃ in the solution is 0-10% of the total dissolved iron concentration and preferably between 5-10%.

11. Method according to any one of claims 1 to 10, comprising the further step of adjusting the total dissolved iron concentration and/or Cl concentration in a downstream processes.

12. Method according to any one of claims 1 to 11, wherein solution from the reactor is also directed through a cathode of the electrochemical cell and back to the reactor, whereby Fe³⁺ reacts to Fe²⁺ at the anode and Fe²⁺ reacts to Fe³⁺ at the cathode, wherein an external power source provides energy to drive the reaction, and the method further comprises monitoring the Fe³⁺ concentration in the reactor and controlling the flow rate from the reactor to result in a desired Fe³⁺ concentration in the reactor.

13. Method according to any one of claims 1 to 11, wherein the electrochemical cell is a hydrogen recombination cell, wherein hydrogen, H₂, is fed to the cathode of the hydrogen recombination cell, thereby reacting via H₂ + 2 Fe³⁺ -> 2Fe²⁺ + 2H⁺, wherein an external power load is used to dissipate the energy generated by the reaction, and the method further comprises monitoring the Fe³⁺ concentration in the reactor and controlling the flow rate from the reactor to result in a desired Fe³⁺ concentration in the reactor.

14. Method according to any one of claims 1 to 11, wherein the electrochemical cell is an electrolysis cell, wherein hydrochloric acid, HCl, is fed to the cathode of the electrolysis cell, thereby reacting via 2OH⁻ + 2Fe³⁺ -> 2Fe²⁺ + ½ O₂ + H₂O, wherein an external power source provides energy to drive the reaction, and the method further comprises monitoring the Fe³⁺ concentration in the reactor and controlling the flow rate from the reactor to result in a desired Fe³⁺ concentration in the reactor.

15. Method according to claim 14, wherein the hydrochloric acid fed to the cathode has a pH in the range of 0 - 1, and wherein produced oxygen, Oz, is released from the cathode.

16. Apparatus for preparation of an iron salt battery electrolyte, in particular performed by a method according to any one of claim 1 to 15, comprising:
a reactor configured to be agitated, the reactor configured to contain a reactor solution comprising a dilute solution of hydrochloric acid, HCl, having a pH value less than 1;
a pH monitoring device configured to monitor the pH value of the reactor solution;
an electrochemical cell having a membrane or a separator between an anode and a cathode thereof;
a flow adjustment device, in particular a pump or a valve, configured to adjust a flow rate of the reactor solution from the reactor through the anode of the electrochemical cell; and
a controller configured to use the monitored pH value to control supplying additional hydrochloric acid, HCl, into the reactor in order to maintain a pH of the reactor solution less than 1, and configured to control the flow rate of the reactor solution through the anode to obtain a final Fe³⁺ concentration in the anode outlet FeCl₂ stream of 15% or less than 15% of a total dissolved iron concentration as the iron salt battery electrolyte.
